(19) Europäisches Patentamt
European Patent Office
Office européen des brevets

(11) Veröffentlichungsnummer: **0 148 433**
**A1**

(12) **EUROPÄISCHE PATENTANMELDUNG**

(21) Anmeldenummer: **84115041.0**

(22) Anmeldetag: **10.12.84**

(51) Int. Cl.⁴: **D 06 P 5/17**, C 09 B 29/039

(30) Priorität: **15.12.83 DE 3345417**

(43) Veröffentlichungstag der Anmeldung: **17.07.85**
**Patentblatt 85/29**

(84) Benannte Vertragsstaaten: **DE FR IT**

(71) Anmelder: **BASF Aktiengesellschaft,**
**Carl-Bosch-Strasse 38, D-6700 Ludwigshafen (DE)**

(72) Erfinder: **Bergmann, Udo, Dr. Dipl.-Ing.,**
**Merckstrasse 26, D-6100 Darmstadt (DE)**
Erfinder: **Dix, Johannes Peter, Dr. Chemiker,**
**Ludwigshafener Strasse 125, D-6708 Neuhofen (DE)**
Erfinder: **Hansen, Guenter, Dr. Chemiker,**
**Alwin-Mittasch-Platz 8, D-6700 Ludwigshafen (DE)**
Erfinder: **Strickler, Klaus, Chemotechniker,**
**Brunckstrasse 44 a, D-6701 Maxdorf (DE)**

(54) **Verfahren zur Herstellung von Ätzdrucken.**

(57) Die Erfindung betrifft ein Verfahren zur Herstellung von alkalisch ätzbaren Drucken, das dadurch gekennzeichnet ist, daß man als Farbstoffe Verbindungen der allgemeinen Formel I

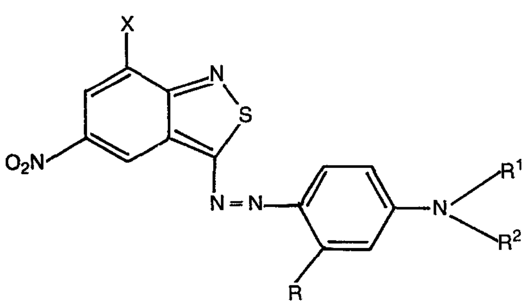

I

verwendet, in der
X Wasserstoff, Chlor oder Brom,
R Wasserstoff, Methyl, Chlor oder $C_1$- bis $C_4$-Alkanoylamino,
$R_1$ $C_2$- bis $C_4$-Hydroxyalkyl, $C_3$- bis $C_6$-Dihydroxyalkyl, $C_1$- bis $C_4$-Alkoxyhydroxyalkyl, $C_2$- bis $C_4$-Alkanoyloxy-$C_2$- bis $C_4$-alkyl, Aroyloxy-$C_2$- bis $C_4$-alkyl, $C_1$- bis $C_4$-Alkoxycarbonyloxy-$C_2$- bis $C_4$-alkyl, $C_1$- bis $C_4$-Alkyl-aminocarbonyloxy-$C_2$- bis $C_4$-alkyl oder Arylaminocarbonyloxy-$C_2$- bis $C_4$-alkyl und
$R^2$ eine Alkylencarbonestergruppe sind.

EP 0 148 433 A1

Verfahren zur Herstellung von Ätzdrucken

Die Erfindung betrifft ein Verfahren zur Herstellung von alkalisch ätzbaren Drucken, das dadurch gekennzeichnet ist, daß man als Farbstoffe Verbindungen der allgemeinen Formel I

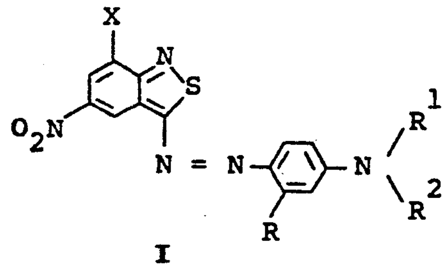

I

verwendet, in der

X Wasserstoff, Chlor oder Brom,

R Wasserstoff, Methyl, Chlor oder $C_1$- bis $C_4$-Alkanoylamino,

$R_1$ $C_2$- bis $C_4$-Hydroxyalkyl, $C_3$- bis $C_6$-Dihydroxyalkyl, $C_1$- bis $C_4$-Alkoxyhydroxyalkyl, $C_2$- bis $C_4$-Alkanoyloxy-$C_2$- bis $C_4$-alkyl, Aroyloxy-$C_2$-$C_4$-alkyl, $C_1$- bis $C_4$-Alkoxycarbonyloxy-$C_2$- bis $C_4$-alkyl, $C_1$- bis $C_4$-Alkylaminocarbonyloxy-$C_2$-bis $C_4$-alkyl oder Arylaminocarbonyloxy-$C_2$- bis $C_4$-alkyl und

$R^2$ eine Alkylencarbonestergruppe sind.

Alkanoylaminoreste R sind z.B.:
Butyroylamino, Propionylamino, Formylamino und insbesondere Acetylamino.

Reste $R^1$ sind im einzelnen beispielsweise:

$C_2H_4OH$, $CH_2$-CHOH-$CH_3$, $CH_2$-CH-$C_2H_5$, CH-($CH_2$OH); $CH_2CHOHCH_2OH$
$C_2H_5$ OH $CH_3$

$CH_2CH_2$-$CH_2$OH, CH-($CH_2$OH), $C_2H_4OCOCH_3$, $C_2H_4OCOC_2H_5$, $C_2H_4OCOC_6H_5$, $C_2H_4OCOOCH_3$, $C_2H_4OCOOC_2H_5$, $C_2H_4OCOOC_3H_7$, $C_2H_4OCOOC_4H_9$, $C_2H_4OCONH$-$C_3H_7$, $C_2H_4OCONHC_4H_9$, $CH_2CHOHOCH_3$, $CH_2CHOHCH_2OC_2H_5$, $CH_2CHOHCH_2OC_3H_7$, $CH_2CHOHCH_2OC_4H_9$,

Bg/P

$CH_2-CH(CH_3)OCOCH_3$, $CH_2CH(CH_3)OCOC_2H_5$, $CH_2CH(C_2H_5)OCOCH_3$, $CH_2CH(C_2H_5)OCOC_2H_5$, $CH(CH_3)CH_2OCOCH_3$, $CH(CH_3)CH_2OCOC_2H_5$, $CH(C_2H_5)CH_2OCOCH_3$ oder $CH(C_2H_5)CH_2OCOC_2H_5$.

Für $R^2$ sind im einzelnen beispielsweise zu nennen:

$CH_2-COOCH_3$, $CH_2-COOC_2H_5$, $CH_2COOC_3H_7$, $CH_2COOC_4H_9(n)$, $CH_2COOCH_2-CH(CH_3)_2$, $C_2H_4COOCH_3$, $C_2H_4COOC_2H_5$, $C_2H_4COOC_3H_7$, $C_2H_4COOCH(CH_3)_2$, $C_2H_4COOC_4H_9(n)$, $C_2H_4COOCH_2CH(CH_3)_2$, $C_2H_4COOC_6H_{13}$, $C_2H_4COOC_6H_5$, $C_2H_4COOC_6H_{11}$, $C_2H_4COOCH_2C_6H_5$, $C_2H_4COOC_2H_4C_6H_5$, $C_2H_4COOC_2H_4OC_6H_5$, $C_2H_4COOC_2H_4OCH_3$, $C_2H_4COOC_2H_4OC_2H_5$, $C_2H_4COOC_2H_4OC_4H_9$, $CH(CH_3)CH_2COOCH_3$, $CH(CH_3)CH_2COOC_2H_5$, $CH(CH_3)CH_2COOC_4H_9$, $CH(CH_3)CH_2COOC_2H_4OC_2H_5$.

Die Herstellung der Farbstoffe erfolgt wie üblich nach an sich bekannten Methoden.

Als Ätzverfahren sind ebenfalls die bekannten, z.B. die in der GB-PS 1543724 und der GB-A 2071707 beschriebenen, mit alkalisch wirkenden Mitteln arbeitenden Methoden brauchbar. Einige repräsentative Verfahren sind in den Beispielen angegeben, in denen sich Angaben über Teile und Prozente, sofern nicht anders vermerkt, auf das Gewicht beziehen.

Von besonderer Bedeutung sind Verbindungen der Formel Ia

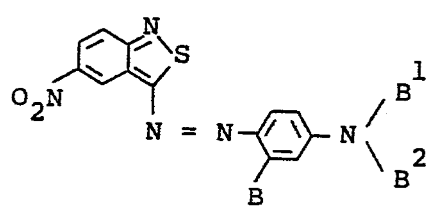

in der

B Wasserstoff oder Methyl,

$B^1$ $C_2$- bis $C_4$-Hydroxyalkyl, $CH_2CHOHCH_2OH$ oder $CH_2CHOHCH_2OCH_3$ und

$B^2$ $C_1$- bis $C_4$-Alkoxycarbonylethylen sind.

Beispiel 1

50 Teile des Farbstoffs der Formel

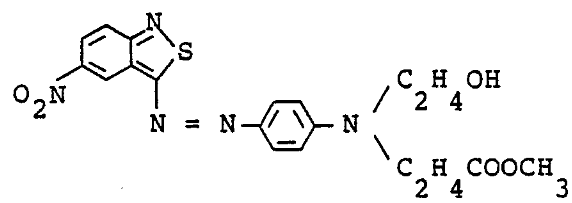

werden in feiner Verteilung zu einer Klotzflotte gegeben, die 925 Teile Wasser, 5 Teile Mononatriumphosphat, 10 Teile Natriumchlorat und 10 Teile eines Polymerisationsproduktes auf Acrylsäurebasis als Antimigrationsmittel enthält. Man klotzt auf einem Zweiwalzenfoulard bei einer Flottenaufnahme von 65 % und trocknet bei 100 °C. Nach dem Trocknen wird mit einer Druckpaste, die 275 Teile einer 10 %igen wässrigen Stärkeätherverdickung, 275 Teile einer 10 %igen wässrigen Alginatverdickung, 80 Teile Glyzerin und 80 Teile Natronlauge 38 % auf 1000 Teile enthält, überdruckt.

Anschließend wird mit überhitztem Dampf 8 Minuten bei 170 °C fixiert, dann reduktiv gereinigt, gespült und getrocknet.

Man erhält einen marineblauen Druck mit guten Echtheiten. An den Stellen, auf die die natronlaugenhaltige Druckpaste aufgedruckt wurde, erhält man einen sehr guten Weißfond mit scharfen Konturen.

Beispiel 2

40 Teile des Farbstoffs der Formel

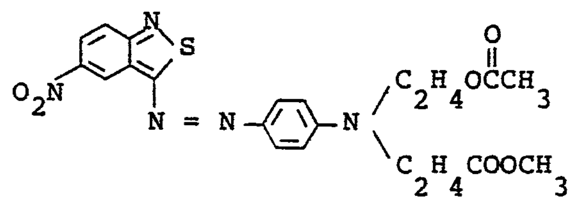

werden in feinverteilter Form in eine Klotzflotte gegeben, die 935 Teile Wasser, 2 Teile Zitronensäure, 8 Teile Natriumchlorat und 15 Teile eines Polymerisationsproduktes als Antimigrationsmittel enthält. Nach dem Zwischentrocknen wird mit einer Druckpaste, die 300 Teile einer 10 %igen Kernmehlätherverdickung, 300 Teile einer 10 %igen Stärkeätherverdickung, 80 Teile Pottasche, 75 Teile Polyethylenglykol (Molgewicht 300) und 245 Teile Wasser enthält, überdruckt.

Nach dem Trocknen bei 90 - 100 °C wird 6 Minuten bei 180 °C mit überhitztem Dampf fixiert, danach reduktiv gereinigt, gespült und getrocknet.

Es resultiert ein dunkelblauer Druck mit guten Echtheiten und mit einem an den geätzten Stellen sehr guten Weißfond mit scharfen Konturen.

Beispiel 3

Anstelle von 40 Teilen des Farbstoffs von Beispiel 2 werden 60 Teile des Farbstoffs der Formel

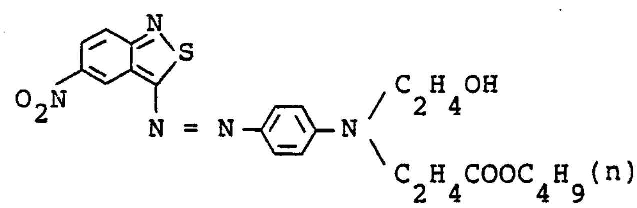

verwendet und im übrigen wie im Beispiel 2 angegeben, verfahren. Man erhält einen marineblauen Druck mit sehr guten coloristischen Eigenschaften und an den geätzten Stellen einen sehr guten Weißfond mit scharfen Konturen.

Beispiel 4

Man bedruckt ein Polyestergewebe mit einer Druckpaste, die 300 Teile einer 10 %igen Stärkeätherverdickung, 200 Teile einer 10 %igen Alginatverdickung, 75 Teile Soda, 80 Teile Polyethylenglykol (Molgewicht 600) und 345 Teile Wasser enthält, mit einer gemusterten Flachfilmdruckschablone. Im gleichen Arbeitsgang wird mit einer zweiten Schablone, die vollflächig offen ist, mit einer Druckpaste überdruckt, die 40 Teile des Farbstoffs der Formel

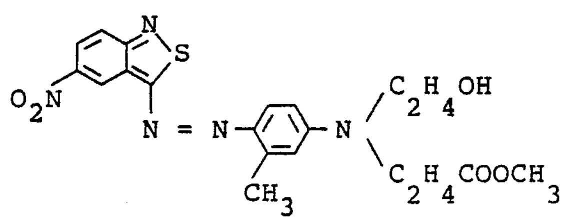

in dispergierter Form, 10 Teile Mononatriumphosphat, 500 Teile einer 10 %igen Alginatverdickung und 450 Teile Wasser enthält.

Nach einer Zwischentrocknung bei 80 °C wird 7 Minuten bei 175 °C mit überhitztem Dampf fixiert, anschließend reduktiv gereinigt, gespült und getrocknet.

Es resultiert ein dunkelblauer Druck mit guten Echtheiten, der an den mit der sodahaltigen Druckpaste vorgedruckten Stellen weiße Muster mit scharfem Stand aufweist.

Analog den Beispielen 1-4 erhält man ebenfalls durch Alkali weiß ätzbare Drucke mit sehr guten coloristischen Eigenschaften, wenn die in der folgenden Tabelle gekennzeichneten Farbstoffe eingesetzt werden.

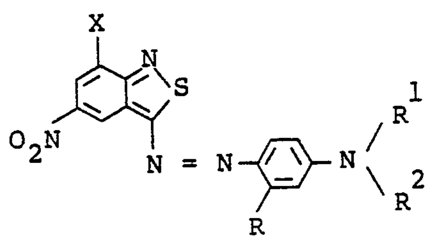

| Bsp. Nr. | X | R | $R_1$ | $R_2$ | Farbton auf Polyester |
|---|---|---|---|---|---|
| 5 | H | H | $CH_2CHOHCH_3$ | $C_2H_4COOCH_3$ | blau |
| 6 | H | H | $CH_2CHOHC_2H_5$ | $C_2H_4COOCH_3$ | blau |
| 7 | H | H | $C_2H_4OCOOCH_3$ | $C_2H_4COOCH_3$ | blau |
| 8 | H | H | $C_2H_4OCOOC_2H_5$ | $C_2H_4COOCH_3$ | blau |
| 9 | H | H | $C_2H_4OCONHC_3H_7$ | $C_2H_4COOCH_3$ | blau |
| 10 | H | H | $C_2H_4OCONHC_4H_9$ | $C_2H_4COOCH_3$ | blau |
| 11 | H | H | $C_2H_4OH$ | $C_2H_4COOC_2H_5$ | blau |
| 12 | H | H | $C_2H_4OH$ | $C_2H_4COOCH_2CH(CH_3)_2$ | blau |
| 13 | H | H | $C_2H_4OCOCH_3$ | $C_2H_4COOC_2H_5$ | blau |

| Bsp. Nr. | X | R | $R_1$ | $R_2$ | Farbton auf Polyester |
|---|---|---|---|---|---|
| 14 | H | H | $C_2H_4COC_2H_5$ | $C_2H_4COOCH_3$ | blau |
| 15 | H | H | $C_2H_4COC_2H_5$ | $C_2H_4COOC_2H_5$ | blau |
| 16 | H | H | $CH_2(CH_3)OCOCH_3$ | $C_2H_4OCOOCH_3$ | blau |
| 17 | H | H | $C_2H_4OH$ | $CH(CH_3)CH_2COOCH_3$ | blau |
| 18 | H | H | $C_2H_4OH$ | $CH_2COOCH_3$ | rotst. blau |
| 19 | H | $CH_3$ | $CH_2CHOHCH_3$ | $C_2H_4COOCH_3$ | blau |
| 20 | H | $CH_3$ | $C_2H_4OH$ | $C_2H_4COOC_4H_9(n)$ | blau |
| 21 | H | $CH_3$ | $C_2H_4OCOCH_3$ | $C_2H_4COOC_2H_5$ | blau |
| 22 | H | $CH_3$ | $C_2H_4OCOOCH_3$ | $C_2H_4COOCH_3$ | blau |
| 23 | H | $CH_3$ | $C_2H_4OCOCH_3$ | $C_2H_4COOCH_3$ | blau |
| 24 | H | Cl | $C_2H_4OH$ | $C_2H_4COOCH_3$ | blau |
| 25 | H | $NHCOCH_3$ | $C_2H_4OH$ | $C_2H_4COOCH_3$ | blau |
| 26 | H | $NHCOCH_3$ | $C_2H_4OCOCH_3$ | $C_2H_4COOCH_3$ | blau |
| 27 | H | $NHCOCH_3$ | $C_2H_4OCOCH_3$ | $C_2H_4COOC_4H_9(n)$ | blau |
| 28 | Cl | H | $C_2H_4OH$ | $C_2H_4COOCH_3$ | blau |

| Bsp. Nr. | X | R | $R_1$ | $R_2$ | Farbton auf Polyester |
|---|---|---|---|---|---|
| 29 | Cl | H | $C_2H_4OH$ | $C_2H_4COOC_2H_5$ | blau |
| 30 | Cl | H | $C_2H_4OCOCH_3$ | $C_2H_4COOCH_3$ | blau |
| 31 | Cl | $CH_3$ | $C_2H_4OH$ | $C_2H_4COOCH_3$ | grünst. blau |
| 32 | Br | H | $C_2H_4OH$ | $C_2H_4COOCH_3$ | blau |
| 33 | Br | H | $C_2H_4OC(=O)CH_3$ | $C_2H_4COOCH_3$ | blau |
| 34 | Br | $CH_3$ | $C_2H_4OH$ | $C_2H_4COOC_2H_5$ | grünst. blau |
| 35 | Br | H | $CH_2CHOHC_2H_5$ | $C_2H_4COOCH_3$ | blau |
| 36 | H | H | $CH_2-CHOH-CH_2OH$ | $C_2H_4COOC_2H_5$ | blau |
| 37 | H | H | $CH_2-CHOH-CH_2OH$ | $C_2H_4COOCH_3$ | blau |
| 38 | H | $CH_3$ | $CH_2-CHOH-CH_2OH$ | $C_2H_4COOCH_3$ | blau |
| 39 | H | H | $CH_2CHOH-CH_2OCH_3$ | $C_2H_4COOCH_3$ | blau |
| 40 | H | H | $CH_2CHOHCH_2OC_2H_5$ | $C_2H_4COOCH_3$ | blau |

## Patentansprüche

1. Verfahren zur Herstellung von alkalisch ätzbaren Drucken, dadurch gekennzeichnet, daß man als Farbstoffe Verbindungen der allgemeinen Formel I

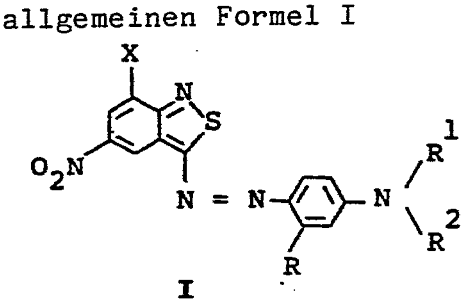

I

verwendet, in der

X Wasserstoff, Chlor oder Brom,

R Wasserstoff, Methyl, Chlor oder $C_1$- bis $C_4$-Alkanoylamino,

$R_1$ $C_2$- bis $C_4$-Hydroxyalkyl, $C_3$- bis $C_6$-Dihydroxyalkyl, $C_1$- bis $C_4$-Alkoxyhydroxyalkyl, $C_2$- bis $C_4$-Alkanoyloxy-$C_2$- bis $C_4$-alkyl, Aroyloxy-$C_2$-$C_4$-alkyl, $C_1$- bis $C_4$-Alkoxycarbonyloxy-$C_2$- bis $C_4$-alkyl, $C_1$- bis $C_4$-Alkylaminocarbonyloxy-$C_2$-bis $C_4$-alkyl oder Arylaminocarbonyloxy-$C_2$- bis $C_4$-alkyl und

$R^2$ eine Alkylencarbonestergruppe sind.

2. Verfahren gemäß Anspruch 1, dadurch gekennzeichnet, daß man Farbstoffe der Formel

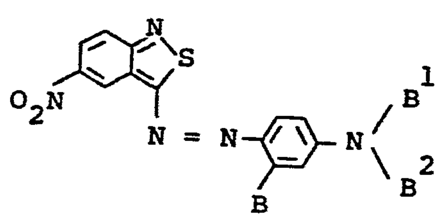

verwendet, in der

B Wasserstoff oder Methyl,

$B^1$ $C_2$- bis $C_4$-Hydroxyalkyl, $CH_2CHOHCH_2OH$ oder $CH_2CHOHCH_2OCH_3$ und

$B^2$ $C_1$- bis $C_4$-Alkoxycarbonylethylen sind.

Europäisches Patentamt

**EUROPÄISCHER RECHERCHENBERICHT**

0148433
Nummer der Anmeldung

EP 84 11 5041

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| Y | EP-A-0 051 818 (CASSELLA) * Ansprüche 1,10; Seite 32, Tabelle 4, Farbstoff 6 * --- | 1 | D 06 P 5/17<br>C 09 B 29/039 |
| Y | US-A-3 455 898 (M. SEEFELDER u.a.) * Spalten 7,8, Beispiel 41 * | 1 | |
| A | | 2 | |
| | --- | | |
| D,Y | GB-A-2 071 707 (ICI) * Ansprüche 1,5,6; Seite 4, Zeile 8 * --- | 1 | |
| D,Y | GB-A-1 543 724 (ICI) * Ansprüche 1,9-11; Seite 3, Zeile 72 * --- | 1 | RECHERCHIERTE SACHGEBIETE (Int. Cl.4) |
| A | DE-A-3 113 732 (BASF) * Beispiel 1, Farbstoff 2; Beispiel 2, Farbstoff * --- | 1 | D 06 P<br>C 09 B |
| P,A | EP-A-0 121 875 (BASF) * Ansprüche 1,5-8 * ----- | 1 | |

Der vorliegende Recherchenbericht wurde für alle Patentansprüche erstellt.

| Recherchenort | Abschlußdatum der Recherche | Prüfer |
|---|---|---|
| DEN HAAG | 22-03-1985 | DEKEIREL M.J. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82